# EUROPÄISCHE PATENTANMELDUNG

(11) **EP 2 918 983 A1**
(43) Veröffentlichungstag der Anmeldung: **16.09.2015**
(21) Anmeldenummer: 15155675.0
(22) Anmeldetag: 19.02.2015
(51) Int. Cl.: G01J 5/10, G01J 5/20, G01J 5/08

(54) **WÄRMESENSOR UND VERFAHREN ZUR HERSTELLUNG EINES WÄRMESENSORS**

(30) Priorität: 13.03.2014 DE 102014204676
(71) Anmelder: ROBERT BOSCH GMBH, 70442 Stuttgart (DE)
(72) Erfinder: Stumber, Michael, 70825 Korntal-Muenchingen (DE); Stein, Benedikt, 70193 Stuttgart (DE); Schelling, Christoph, 70597 Stuttgart (DE)

(57) **Zusammenfassung**

Der hier vorgestellte Ansatz betrifft einen Wärmesensor (100) mit einem Sensorelement (110) zum Erfassen einer Wärmestrahlung (220), wobei das Sensorelement (110) zumindest eine plasmonische Absorberstruktur (120a, 120b) aufweist.

## Beschreibung

### Stand der Technik

Die vorliegende Erfindung bezieht sich auf einen Wärmesensor, auf ein entsprechendes Verfahren zur Herstellung eines Wärmesensors, auf eine entsprechende Vorrichtung sowie auf ein entsprechendes Computerprogrammprodukt.

Bolometer erfassen Wärmestrahlung und ermöglichen so die berührungslose Temperaturmessung. Durch eine kostengünstige Miniaturisierung könnte berührungslose Temperaturmessung vorteilhaft z. B. in Smartphones integriert angeboten und damit für zahlreiche neue Anwendungen interessant werden. Ein solches Bolometer ist beispielsweise aus der Schrift WO 2008/018082 bekannt.

### Offenbarung der Erfindung

Vor diesem Hintergrund werden mit dem hier vorgestellten Ansatz ein Wärmesensor, ein Verfahren zur Herstellung eines solchen Wärmesensors, weiterhin eine Vorrichtung, die dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Der hier vorgestellte Ansatz schafft einen Wärmesensor mit einem Sensorelement zum Erfassen einer Wärmestrahlung, wobei das Sensorelement zumindest eine plasmonische Absorberstruktur aufweist oder mit einer plasmonischen Absorberstruktur gekoppelt ist.

Unter einer plasmonischen Absorberstruktur kann eine Struktur verstanden werden, die so gestaltet ist, dass elektromagnetische Strahlung bestimmter Wellenlänge effizient in lokalisierte oder propagierende Oberflächenplasmonen eingekoppelt wird. Unter Oberflächenplasmonen versteht man dabei gekoppelte Schwingungen des elektromagnetischen Feldes und der Dichte freier Ladungsträger an der Oberfläche von in der Regel Metallen. (Evaneszente) Feldanteile der Oberflächenplasmonen sorgen dafür, dass diese rasch absorbiert, d. h. in Wärme umgewandelt werden. Sie stellen somit effiziente Wandler von EM-Strahlung zu Wärme dar. Beispielsweise kann eine plasmonische Absorberstruktur aus einer Al₂O₃-Schicht oder einer Platin-Lage bestehen oder eine solche umfassen. Auch kann die plasmonische Absorberstruktur aus dem gleichen Material wie das Sensorelement hergestellt sein und/oder elektrisch leitend mit dem Sensorelement verbunden sein. Alternativ oder zusätzlich kann die plasmonische Absorberstruktur auch zumindest eine Öffnung in dem Sensorelement enthalten oder durch eine solche Öffnung gebildet sein. Auch kann die plasmonische Absorberstruktur speziell ausgebildet sein, um resonant bestimmte Wellenlängen(-bereiche) der zu detektierenden Wärmestrahlung zu absorbieren. Auch kann die Absorberstruktur durch ein Element gebildet werden oder zumindest ein Element enthalten, das thermisch mit dem Sensorelement gekoppelt ist.

Der hier vorgestellte Ansatz basiert auf der Erkenntnis, dass durch die Verwendung einer plasmonischen Absorberstruktur Schwingungen in der Ladungsträgerdichte von Halbleitern, Metallen oder Isolatoren zur effizienten Absorption von Wärmestrahlung in dem Sensorelement genutzt werden können.

Der hier vorgestellte Ansatz bietet somit den Vorteil, dass mit technisch sehr einfachen Mitteln eine sehr genaue und schnell zur Verfügung stehende Messgröße vom Sensorelement geliefert wird. Hierdurch lässt sich auf kostengünstige Weise ein präzise arbeitender Wärmesensor schaffen.

Günstig ist eine Ausführungsform des hier vorgestellten Ansatzes, bei der die zumindest eine plasmonische Absorberstruktur eine Kreis- oder Ellipsenform aufweist. Eine solche Ausführungsform der vorliegenden Erfindung bietet den Vorteil, dass durch die geometrischen Abmessungen der Absorberstrukturen ein sehr gutes Absorptionsverhalten realisiert werden kann. Zwar können prinzipiell Absorberstrukturen beliebiger Form verwendet werden, jedoch sind rotationssymmetrische Absorberstrukturen weniger polarisationsabhängig.

Besonders vorteilhaft ist ferner eine Ausführungsform der vorliegenden Erfindung, bei der die plasmonische Absorberstruktur als Teil des Sensorelementes ausgebildet ist. Auf diese Weise lässt sich durch sehr einfache Strukturierungsmaßnahmen des Sensorelementes die vorteilhafte Wirkung des Absorberelementes oder der Absorberstruktur realisieren. Somit lässt sich mit einer geringen Anzahl von Herstellungsschritten ein präzise arbeitender Wärmesensor herstellen bzw. in seiner Empfindlichkeit oder Selektivität auf bestimmte Wärmestrahlung hin optimieren.

Um die Vorteile einer ringförmigen Ausgestaltung der Absorberstruktur zu realisieren, und eine möglichst geringe Masse der angehängten Struktur und eine damit verbundene thermische Trägheit zu reduzieren kann gemäß einer weiteren Ausführungsform des hier vorgestellten Ansatzes die plasmonische Absorberstruktur zumindest teilweise ringförmig um zumindest eine Öffnung herum angeordnet sein.

Vorteilhaft ist ferner eine Ausführungsform des hier vorgestellten Ansatzes, bei der das Sensorelement eine mäanderförmige Struktur aufweist, wobei die plasmonische Absorberstruktur auf oder in einem Zweig der mäanderförmigen Struktur angeordnet ist. Eine solche Ausführungsform der vorliegenden Erfindung bietet den Vorteil bei geringem Platzbedarf eine große Messstrecke zwischen zwei Endpunkten des Sensorelementes realisieren zu können, sodass eine vom Sensorelement bereitgestellte Messgröße eine hohe Präzision aufweist.

Günstig ist ferner eine Ausführungsform des hier vorgestellten Ansatzes, bei der zumindest eine weitere plasmonische Absorberstruktur vorgesehen ist, insbesondere wobei sich eine Form und/oder eine Größe der weiteren plasmonischen Absorberstruktur von einer Form und/oder einer Größe der plasmonischen Absorberstruktur unterscheidet. Ein einzelner Absorber ist in der Regel wellenlängenselektiv. Mehrere Absorber (insbesondere unterschiedlicher Dimension bzw. gleiche Absorber in zwei unterschiedlich-periodischen Anordnungen) können auf demselben Element die Bandbreite vergrößern (dann wird eine höhere Absorption erreicht). Auch lässt sich durch unterschiedliche Strukturen und / oder Anordnungen auf unterschiedlichen Elementen ein multispektrales Abbilden erlauben.

Denkbar ist ferner eine Ausführungsform des hier vorgestellten Ansatzes, bei dem zusätzliche plasmonische Absorberstrukturen vorgesehen sind, insbesondere wobei eine Anordnung der zusätzlichen Absorberstrukturen einer periodischen Anordnung der plasmonischen und der weiteren plasmonischen Absorberstruktur, insbesondere in Bezug auf das Sensorelement, entspricht. Eine solche Ausführungsform des hier vorgestellten Ansatzes bietet den Vorteil eines besonders starken Absorptionsverhaltens durch die Anordnung der zusätzlichen Versorgungsstrukturen, insbesondere periodische Anordnung dieser Strukturen speziell auf oder in dem Sensorelement.

Besonders empfindlich ist ein Wärmesensor gemäß einer Ausführungsform des hier vorgestellten Ansatzes, der ferner ein Reflexionselement zum Reflektieren von Wärmestrahlung aufweist, wobei das Sensorelement in Bezug auf eine Einfallsrichtung der Wärmestrahlung in einem vordefinierten Abstand dem Reflexionselement vorgelagert angeordneten ist. Ein solches Reflexionselement bietet den Vorteil, dass auf den Wärmesensor eintreffende Wärmestrahlung sehr effizient erfasst werden kann.

Gemäß einer anderen Ausführungsform des hier vorgestellten Ansatzes kann die plasmonische Absorberstruktur innerhalb eines Toleranzbereichs in einem gleichen Abstand wie das Sensorelement zu dem Reflexionselement angeordnet sein, insbesondere wobei die plasmonische Absorberstruktur mit dem Sensorelement verbunden ist. Beispielsweise kann der Toleranzbereich eine Abweichung von zehn bis zwanzig Prozent des Abstands des Sensorelements zum Reflexionselement betragen. Eine solche Ausführungsform des hier vorgestellten Ansatzes bietet den Vorteil, dass die Absorberstruktur technisch sehr einfach, günstigerweise ohne zusätzlichen Herstellungsschritt, in Verbindung mit dem Sensorelement hergestellt werden kann, sodass sich ein derart hergestellter Wärmesensor preisgünstig realisieren lässt.

Besonders vorteilhaft ist eine Ausführungsform des hier vorgestellten Ansatzes, bei der das Sensorelement in einem Abstand von dem Reflexionselement angeordnet ist, der innerhalb eines Toleranzbereiches einem Viertel der Wellenlänge entspricht, für deren Detektion das Sensorelement bei Einfall in Richtung der Oberflächennormalen die höchste Empfindlichkeit aufweisen soll. Eine solche Ausführungsform des hier vorgestellten Ansatzes bietet den Vorteil, dass die Wahl des Abstandes zwischen dem Sensorelement und dem Reflexionselement sicherstellt, dass eine vom Reflexionselement reflektierte Wärmestrahlung eine möglichst hohe positive Überlagerung mit auf das Sensorelement direkt einstrahlender Wärmestrahlung erfährt.

Günstig ist ebenfalls eine Ausführungsform des hier vorgestellten Ansatzes als Verfahren zur Herstellung eines Wärmesensors gemäß einer hier beschriebenen Ausführungsform, wobei das Verfahren einen Schritt des Einbringens oder Anbringens der plasmonischen Absorberstruktur in oder an das Sensorelement aufweist.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer-und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung und/oder Ansteuerung der Schritte des Verfahrens nach einer der hier beschriebenen Ausführungsformen verwendet wird, insbesondere wenn das Programmprodukt auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 eine schematische Aufsichtdarstellung eines Wärmesensors gemäß einem Ausführungsbeispiel des hier vorgestellten Ansatzes;
Fig. 2 eine schematische Querschnittdarstellung des Wärmesensors aus Fig. 1;
Fig. 3 eine schematische Aufsichtdarstellung eines Wärmesensors gemäß einem weiteren Ausführungsbeispiel des hier vorgestellten Ansatzes;
Fig. 4 ein Ablaufdiagramm eines Ausführungsbeispiels als Verfahren zur Herstellung eines Wärmesensors gemäß einem Ausführungsbeispiel der vorliegenden Erfindung; und
Fig. 5 ein Blockschaltbild einer Vorrichtung zur Herstellung eines Wärmesensors gemäß einer Variante eines hier vorgestellten Ansatzes.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

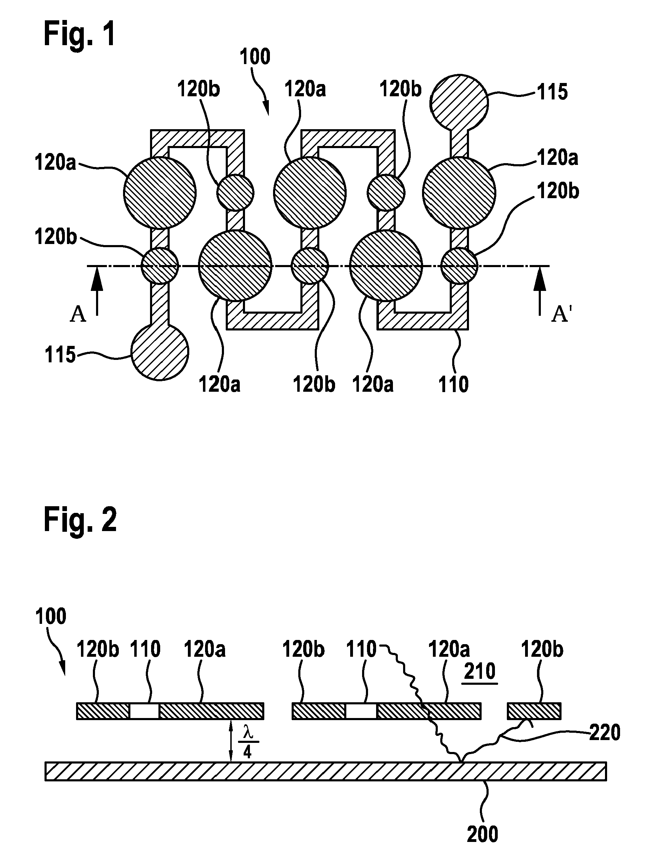

Fig. 1 zeigt eine schematische Aufsichtdarstellung eines Wärmesensors 100 gemäß einem Ausführungsbeispiel der vorliegenden Erfindung. Der Wärmesensor 100 umfasst ein Sensorelement 110, welches sich mäanderförmig zwischen zwei Kontaktankern 115 als Enden des Sensorelementes 110 erstreckt. Das Sensorelement 110 ist aus einer Al₂O₃-Schicht oder einer Platin-Lage gefertigt oder umfasst zumindest eine solche Lage oder Schicht. Ferner weist das Sensorelement 110 mehrere plasmonische Absorberstrukturen 120a und 120b auf, die auf einem Widerstandsmäander als Sensorelement 110 angeordnet sind.

Diese Absorberstrukturen 120a bzw. 120b sind gemäß dem Ausführungsbeispiel aus der Darstellung aus Fig. 1 kreisförmig ausgestaltet und weisen unterschiedliche Größen bzw. Durchmesser auf. Dabei sind auf dem Sensorelement 110 periodisch abwechselnd größere Absorberstrukturen 120 und kleinere angeordnet. Beispielsweise können dabei die Absorberstrukturen 120b in mehreren Zeilen und Spalten angeordnet sein, wobei in einer Spalte abwechselnd Absorberstrukturen mit größeren 120a und kleineren 120b Durchmessern angeordnet sind und/oder wobei ebenfalls in den einzelnen Zeilen abwechselnd Absorberstrukturen mit größeren 120a und kleineren 120b Durchmessern angeordnet sind. Die Absorberstrukturen 120 können aus dem gleichen Material wie das Sensorelement 110 hergestellt sein oder dieses umfassen. Zugleich können die Absorberstrukturen 120 elektrisch leitfähig mit dem Sensorelement 110 verbunden sein. Denkbar ist jedoch auch, dass die Absorberstrukturen 120 aus einem anderen elektrisch leitfähigen Material bestehen oder ein solches Material enthalten.

Fällt Wärmestrahlung auf den Wärmesensor 110, beispielsweise aus einer Richtung in die Zeichenebene der Fig. 1 hinein, wird hierdurch im Sensorelement 110 eine Widerstandsänderung verursacht, beispielsweise indem der elektrische Widerstand des Sensorelementes 110 aufgrund einer Erwärmung durch die Wärmestrahlung erhöht oder verringert wird. Denkbar ist auch, dass die Absorberstrukturen 120 nicht elektrisch leitfähig mit dem Sensorelement 110 verbunden werden, sondern beispielsweise thermisch mit dem Sensorelement 110 gekoppelt werden.

Fig. 2 zeigt eine Querschnittsdarstellung durch den Wärmesensor 100 aus Fig. 1 durch eine Schnittlinie AA'. Hierbei ist erkennbar, dass die Absorberstrukturen 120 direkt in dem Sensorelement 110 ausgebildet sind. Ferner ist aus der Fig. 2 erkennbar, dass der Wärmesensor 100 ein Reflexionselement 200 umfasst, welches der Einfallsseite 210 bzw. Einfallsrichtung der Wärmestrahlung 220 gegenüberliegend angeordnet ist. Das Reflexionselement 200 ist als Schicht ausgebildet, die sich über die gesamte Ausdehnung des Sensorelementes 110 erstreckt und Wärmestrahlung zurück in Richtung des Sensorelementes 110 bzw. der Absorberstruktur 120 reflektiert. Auch kann das Reflexionselement 200 lediglich in einzelnen Abschnitten des Sensorelementes 110 vorgesehen werden.

Um eine möglichst gute Absorption der einfallenden Wärmestrahlung zu erreichen, sollte das Reflexionselement 200 innerhalb eines Toleranzbereichs (von beispielsweise 10 Prozent) um einem vordefinierten Abstand von einem Viertel der Wellenlänge der Wärmestrahlung angeordnet sein, für den das Sensorelement 110 am empfindlichsten ist. Auf diese Weise kann durch das Reflexionselement 200 eine sehr effiziente Ausnutzung der auf den Wärmesensor 100 einfallenden Wärmestrahlung 220 erreicht werden.

Denkbar ist ferner auch eine in der Fig. 2 nicht dargestellte Anordnung der Absorberstrukturen 120 auf einer dem Reflexionselement 200 abgewandten Seite an dem Sensorelement 110 und/oder zwischen Windungen (in einem Zwischenraum) des Sensorelementes 110, also in gleicher Lage wie das Sensorelement 110. Dabei können die Absorberstrukturen 120 elektrisch leitfähig mit dem Sensorelement 110 verbunden oder auch thermisch mit dem Sensorelement 110 gekoppelt sein.

Auch können die Absorberstrukturen 120 in einem Bereich zwischen dem Sensorelement 110 und dem Reflexionselement 200 angeordnet sein, was ebenfalls in der Fig. 2 nicht dargestellt ist. Auch hier können die Absorberstrukturen 120 elektrisch leitfähig mit dem Sensorelement 110 verbunden sein oder auch thermisch mit dem Sensorelement 110 gekoppelt sein. Die Größe und/oder Form der Absorberstrukturen 120 ist nicht zwangsläufig auf die Kreisform eingeschränkt, wie sie in der Fig. 1 dargestellt ist. Vielmehr ist es auch möglich, die Absorberstrukturen in Ellipsen, Rechtecken, Dreiecken oder anderen geometrischen Formen auszugestalten.

Es müssen auch nicht zwingend mehrere Absorberstrukturen 120 an oder auf dem Sensorelement 110 vorgesehen werden. Auch bereits durch das Vorsehen einer einzigen plasmonischen Absorberstruktur 120 auf oder an einem Sensorelement 110 kann bereits eine signifikante Erhöhung der Absorption im Sensorelement 110 erreicht werden, sodass die Vorteile des hier beschriebenen Ansatzes erreicht werden können.

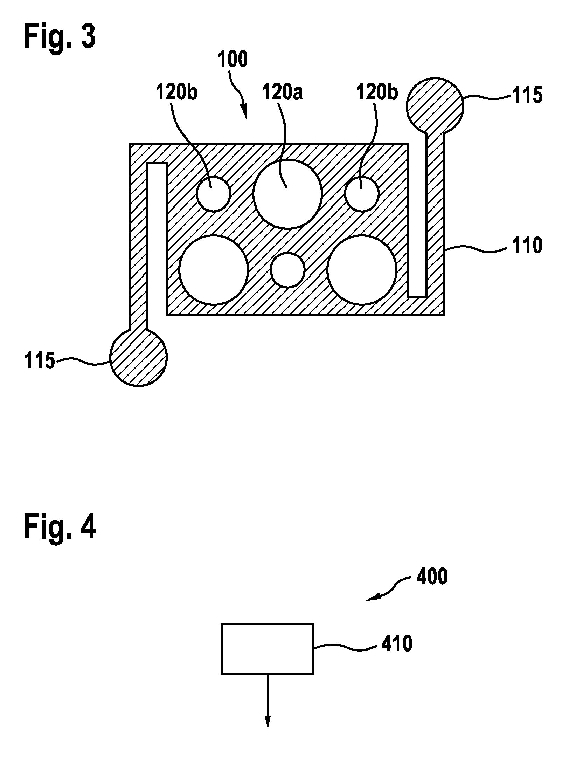

Fig. 3 zeigt eine Aufsichtdarstellung eines weiteren Ausführungsbeispiels des hier vorgeschlagenen Ansatzes. Im Unterschied zu den in den Figuren 1 und 2 dargestellten Absorberstrukturen 120 sind nun als Absorberstrukturen 120 Öffnungen in dem mäanderförmig ausgerichteten Sensorelement 110 vorgesehen. Auch derartige Absorberstrukturen 120 erlauben eine Erhöhung der Absorption durch Kopplung an Oberflächenplasmonen im Sensorelement 110. Besonders vorteilhaft ist es hier ebenfalls, wenn die einzelnen Absorberstrukturen 120 wieder in einer Mehrzahl vorgesehen werden, insbesondere wenn die Absorberstrukturen 120 als Öffnungen in einer wiederkehrenden geometrischen Anordnung im Sensorelement 110 (beispielsweise entsprechend der in der Fig. 1 dargestellten Anordnung) eingebracht sind. Dabei ist der Bereich des Sensorelementes 110, in dem die Absorberstrukturen 120 eingebracht sind, als großes rechteckförmiges Widerstandsmäanderelement ausgebildet, welches die Löcher als Absorberstrukturen 120 trägt. Fig. 3 zeigt somit eine Messstruktur als Wärmesensor 100 mit in den Widerstand (bzw. das Sensorelement 110) integrierten plasmonischen Loch-Absorberstrukturen 120. Auch in einem Wärmesensor 100 gemäß dem in der Fig. 3 dargestellten Ausführungsbeispiel kann natürlich wieder ein Reflexionselement 200 entsprechend der Darstellung aus der Fig. 2 verwendet werden, auch wenn dies in der Fig. 3 nicht explizit dargestellt ist.

Die generelle Funktionsweise eines Bolometers bzw. Wärmesensors 100 besteht in der gezielten Absorption von Wärmestrahlung einer ausgewählten Quelle. Die dadurch erzeugte Erwärmung des Messfühlers oder Sensorelementes 110 wird vorzugsweise elektrisch (beispielsweise durch eine Widerstandsmessung) erfasst.

Ein wichtiger Punkt für eine zuverlässige und ausreichend empfindliche (d. h. genaue) Messung ist eine möglichst vollständige Absorption der Wärmestrahlung im Messfühler 110 durch geeignetes Design, Bauform und Materialien.

Durch den hier vorgestellten Ansatz lässt sich die Absorption in der Messstruktur 110 signifikant für einen designten Wellenlängenbereich erhöhen.

Bei Dünnschicht-Bolometern 100 besteht die Messstruktur aus einer wenige Nanometer dünnen serpentinenförmigen Widerstandswendel 110. Beispielsweise besteht die Messstruktur 110 aus einer oder mehreren Al₂O₃- und Platin-Schicht(en), die mittels ALD (ALD = atomic layer deposition) abgeschieden werden, und die in einem Abstand von ungefähr einem Viertel der mittleren Wellenlänge der zu messenden Strahlung (λ/4) über einem reflektierenden Substrat 200 aufgehängt wird. Bei der Wahl der Dicke des Absorbers, d. h. der Absorberstruktur 120 sollte ein Kompromiss zwischen geringem Wärmetransport, geringer Wärmekapazität und hoher Absorptionswahrscheinlichkeit gefunden werden. Eine geringe Dicke sorgt einerseits für eine schlechte Wärmableitung und niedrige Wärmekapazität, wodurch die Messstruktur 110 sich leicht erwärmen lässt, was zur Steigerung der Empfindlichkeit beiträgt. Andererseits wird dadurch die Absorptionsfähigkeit und damit die Quanteneffizienz des Detektors verringert (kürzerer Absorptionspfad), sodass in Summe ein signifikanter Anteil der eingestrahlten IR-Strahlungsleistung (IR = Infrarot) durch die Struktur 110 transmittiert und im Substrat absorbiert wird, das eigentlich als Reflektor 200 dienen soll. Beispielsweise kann die Dicke des Widerstandswendel eine Zehntel der Wellenlänge der zu messenden Wärmestrahlung betragen.

Durch plasmonische Strukturen als Absorberstrukturen 120 kann gezielt die Einkopplung von Strahlung ausgewählter Wellenlängen in die entsprechend strukturierte Messstruktur signifikant erhöht werden. Im vorliegenden Ansatz wird daher vorgeschlagen, die absorbierende Schicht 110 des Bolometers 100 mit mindestens einer plasmonischen Resonanzstruktur(bzw. mehreren Resonanzstrukturen) 120 (z. B. Ellipsenflächen mit einem Durchmesser zwischen 0,5 ... 50 µm und Gitterabständen zwischen 1 ... 20µm oder Kreuzstrukturen, bzw. deren inverse Lochstrukturen) in einer oder mehreren verschiedenen Größen und in möglichst periodischer Gitteranordnung in die Messstruktur, hier z. B. einen Widerstandsmäander, zu integrieren und auf diese Weise im angestrebten Wellenlängenbereich eine deutlich höhere Absorption in der Messstruktur 110 zu erzielen.

Dieses Ziel kann mit unterschiedlichem Aufwand durch unterschiedliche Strukturierungsmethoden verschieden gut erreicht werden, sodass am Ende eine Kosten/Nutzen Abschätzung die zu realisierende Variante bestimmen wird.

Als mögliche Varianten zur Anordnung der Absorberstrukturen 120 wären hier anzuführen:
a) Strukturierung des Widerstandsmäanders 110 durch Einbringen plasmonischer Absorber 120 (z. B. Disks, beispielsweise entsprechend der Darstellung aus Fig. 1 oder 3);
b) Einbringen von plasmonischen Strukturen 120 (z. B. Absorberdisks) zwischen die Widerstandsstrukturen 110 in der gleichen Schicht; und/oder
c) Einbringen der plasmonischen Strukturen 120 über/unter der Widerstandsstruktur 110 in einer zusätzlichen Schicht (von Absorbermaterial).

Die plasmonischen Resonanzstrukturen 120 können durch geeignete Wahl ihrer Form und Dimensionen sowie der Gitterabstände auf eine bestimmte Wellenlänge λ der zu absorbierenden Strahlung optimiert werden, oder bei mehreren verschiedenen Resonanzstrukturen gezielt breitbandig für die Aufnahme von IR-Strahlung eines ausgewählten Bereichs des Spektrums der Wärmestrahlung optimiert werden.

Zusätzlich wäre durch Anbringen unterschiedlicher Strukturen auf separaten Bolometern auch eine multispektrale Messung bzw. eine weitere Steigerung der Messgenauigkeit erreichbar.

Fig. 4 zeigt ein Ablaufdiagramm eines Ausführungsbeispiels als Verfahren 400 zur Herstellung eines Wärmesensors gemäß einer Variante des hier vorgestellten Ansatzes, wobei das Verfahren 400 einen Schritt 410 des Einbringens oder Anbringens der plasmonischen Absorberstruktur in oder an das Sensorelement aufweist.

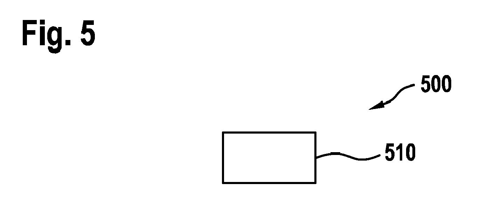

Fig. 5 zeigt ein Blockschaltbild einer Vorrichtung 500 zur Herstellung eines Wärmesensors 100 gemäß einer Variante eines hier vorgestellten Ansatzes, wobei die Vorrichtung 500 eine Einheit 510 zum des Einbringens oder Anbringens der plasmonischen Absorberstruktur 120 in oder an das Sensorelement 110 aufweist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Wärmesensor (100) mit einem Sensorelement (110) zum Erfassen einer Wärmestrahlung (220), wobei das Sensorelement (110) zumindest eine plasmonische Absorberstruktur (120a, 120b) aufweist und/oder mit einer plasmonischen Absorberstruktur (120a, 120b) gekoppelt ist.

2. Wärmesensor (100) gemäß Anspruch 1, **dadurch gekennzeichnet, dass** die zumindest eine plasmonische Absorberstruktur (120a, 120b) lateral eine Polygon-, Kreis- oder Ellipsenform aufweist.

3. Wärmesensor (100) gemäß einem der vorangegangenen Ansprüche, **dadurch gekennzeichnet, dass** die plasmonische Absorberstruktur (120a, 120b) als Teil des Sensorelementes (100) ausgebildet ist, insbesondere wobei das Sensorelement (110) im Bereich der plasmonischen Absorberstruktur (120a, 120b) eine größere Dicke und/oder Breite als in einem weiteren Bereich des Sensorelementes (100) aufweist.

4. Wärmesensor (100) gemäß einem der vorangegangenen Ansprüche, **dadurch gekennzeichnet, dass** die plasmonische Absorberstruktur (120a, 120b) zumindest teilweise ringförmig um zumindest eine Öffnung herum angeordnet ist, insbesondere wobei die Öffnung in dem Sensorelement (110) eingebracht ist.

5. Wärmesensor (100) gemäß einem der vorangegangenen Ansprüche, **dadurch gekennzeichnet, dass** das Sensorelement (110) eine mäanderförmige Struktur aufweist, wobei die plasmonische Absorberstruktur (120a, 120b) auf oder in einem Zweig der mäanderförmigen Struktur angeordnet ist.

6. Wärmesensor (100) gemäß einem der vorangegangenen Ansprüche, **gekennzeichnet durch** zumindest eine weitere plasmonische Absorberstruktur (120b), insbesondere wobei sich eine Form und/oder eine Größe der weiteren plasmonischen Absorberstruktur (120b) von einer Form und/oder einer Größe der plasmonischen Absorberstruktur (120a) unterscheidet.

7. Wärmesensor (100) gemäß Anspruch 6, **dadurch gekennzeichnet, dass** zusätzliche plasmonische Absorberstrukturen (120a, 120b) vorgesehen sind, insbesondere wobei eine Anordnung der zusätzlichen Absorberstrukturen (120a, 120b) einer periodischen Anordnung der Anordnung der plasmonischen und der weiteren plasmonischen Absorberstruktur (120a, 120b), insbesondere in Bezug auf das Sensorelement (110), entspricht.

8. Wärmesensor (100) gemäß einem der vorangegangenen Ansprüche, **gekennzeichnet durch** ein Reflexionselement (200) zum Reflektieren von Wärmestrahlung (220), wobei das Sensorelement (110) in Bezug auf eine Einfallsrichtung (210) der Wärmestrahlung (220) in einem vordefinierten Abstand (λ/4) dem Reflexionselement (200) vorgelagert angeordneten ist.

9. Wärmesensor (100) gemäß Anspruch 8, **dadurch gekennzeichnet, dass** die plasmonische Absorberstruktur (120) näher an dem Reflexionselement (200) angeordnet ist, als das Sensorelement (110).

10. Wärmesensor (100) gemäß Anspruch 8 oder 9, **dadurch gekennzeichnet, dass** die plasmonische Absorberstruktur (120a, 120b) innerhalb eines Toleranzbereichs in einem gleichen Abstand wie das Sensorelement (110) zu dem Reflexionselement (200) angeordnet ist, insbesondere wobei die plasmonische Absorberstruktur (120a, 120b) mit dem Sensorelement (110) verbunden ist.

11. Wärmesensor (100) gemäß einem der vorangegangenen Ansprüche 8 bis 10, **dadurch gekennzeichnet, dass** das Sensorelement (110) in einem Abstand von dem Reflexionselement (200) angeordnet ist, der innerhalb eines Toleranzbereiches einem Viertel der Wellenlänge (A) entspricht, für deren Detektion das Sensorelement (110) die höchste Empfindlichkeit aufweist.

12. Verfahren (400) zur Herstellung eines Wärmesensors (100) gemäß einem der vorangegangenen Ansprüche, wobei das Verfahren (400) einen Schritt (410) des Einbringens oder Anbringens der plasmonischen Absorberstruktur (120a, 120b) in oder an das Sensorelement (110) aufweist.

13. Vorrichtung, die ausgebildet ist, um alle Schritte eines Verfahrens (400) gemäß Anspruch 12 durchzuführen, umzusetzen und/oder anzusteuern.

14. Computerprogramm, das dazu eingerichtet ist, alle Schritte eines Verfahrens (400) nach Anspruch 12 durchzuführen.

15. Maschinenlesbares Speichermedium mit einem darauf gespeicherten Computerprogramm nach Anspruch 14.
